# EUROPÄISCHE PATENTANMELDUNG

(11) **EP 4 397 688 A1**
(43) Veröffentlichungstag der Anmeldung: **10.07.2024**
(21) Anmeldenummer: 23150791.4
(22) Anmeldetag: 09.01.2023
(51) Int. Cl.: C08F 10/06, C01G 3/00, C08F 4/6592

(54) **VERFAHREN ZUR HERSTELLUNG VON POLYETHYLEN- ODER POLYPROPYLEN-WACHSEN AUS NACHWACHSENDEN ODER RECYCELTEN ROHSTOFFEN**

(71) Anmelder: Clariant International Ltd, 4132 Muttenz (CH)
(72) Erfinder: SCHWABE, Jeremia, 86150 Augsburg (DE); STEIB, Christian, 86356 Steppach / Neusaess (DE); FELL, Rainer, 86368 Gersthofen (DE); SICKEN, Martin, 51149 Köln (DE)
(74) Vertreter: Clariant Produkte (Deutschland) GmbH

(57) **Zusammenfassung**

Die Erfindung betrifft ein Verfahren zur Herstellung von Polyethylen- oder Polypropylen-Wachsen durch katalytische Polymerisation, dadurch gekennzeichnet, dass Ethylen und/oder Propylen und/oder weitere C4 bis C10 1-Olefine zumindest teilweise oder vollständig aus nachwachsenden oder recycelten Rohstoffen hergestellt wurden, sowie ein mittels dieses Verfahrens hergestelltes Polyethylen- und/oder Polypropylen-Wachs und dessen Verwendung

## Beschreibung

### Technisches Gebiet der Erfindung

Die Erfindung betrifft Verfahren zur Herstellung von Polyethylen- oder Polypropylen-Wachsen aus nachwachsenden oder recycelten Rohstoffen.

### Hintergrund der Erfindung

Der Begriff "nachhaltig" wird im Rahmen der vorliegenden Erfindung ausschließlich in Bezug auf Umweltziele definiert und bezieht sich auf die Fähigkeit, die Ressourcenproduktivität langfristig zu erhalten oder zu steigern.

Viele Materialien, die zur Herstellung von (halb)organischen Produkten dienen, werden traditionell aus Erdöl gewonnen. Umwelt-, Wirtschafts- und Nachhaltigkeitsbedenken schränken die Verwendung von Produkten aus dieser begrenzten Ressource ein. So werden beispielsweise synthetische Tenside für Umweltverstöße verantwortlich gemacht, insbesondere im Hinblick auf Wasserprobleme in Flüssen und Meeren. Ähnliche oder andere Probleme können bei Produkten auftreten, die aus Rohöl hergestellt werden; außerdem ist Rohöl selbst eine schwere Umweltverschmutzung, da es wassergefährdend ist, wie zum Beispiel bei Tankerunfällen.

Es besteht daher der Wunsch, (halb-)organische Materialien aus umweltfreundlicheren und nachhaltigeren Ressourcen herzustellen. Jüngste Forschungen und industrielle Entwicklungen in der chemischen Technik haben gezeigt, dass herkömmliche Monomere wie Ethylen, Propylen oder C4-Fraktionen vollständig aus erneuerbaren Rohstoffen hergestellt werden könnten. Der hier verwendete Begriff "erneuerbar" bezieht sich auf ein Material, das aus natürlichen Prozessen wie der Land- oder Forstwirtschaft stammt und nachwachsen oder wiederhergestellt werden kann, um für künftige Generationen verfügbar zu sein. Er schließt somit nachwachsende oder recycelte Rohstoffe ein.

Solche neuen Verfahren können den Nachteil haben, dass für die Herstellung von Chemikalien ganz andere Rohstoffe benötigt werden, was eine vollständige Umgestaltung der ursprünglichen erdölbasierten Produktionsverfahren und der zugehörigen Anlagen erfordert. Die völlige Aufgabe der bestehenden, gut funktionierenden traditionellen Fabriken selbst ist eine Verschwendung von bestehenden Ressourcen und nicht umweltfreundlich.

Darüber hinaus ist es häufig der Fall, dass Verfahren, die auf herkömmlichen erdölbasierten Rohstoffen basieren, anderen alternativen Verfahren aus erneuerbaren Rohstoffen energetisch überlegen sind. Mit "energetisch überlegen" ist hier ein geringerer Energieverbrauch zur Herstellung der gleichen Menge des Endprodukts gemeint. Dieser Energieverbrauch kann z.B. mit Hilfe des Carbon Footprint gemessen werden. Dies geschieht unter anderem in der so genannten Lebenszyklusanalyse durch die Berechnung der Freisetzung von Kohlendioxid-Äquivalenten für die verwendeten Rohstoffe und den eingesetzten Produktionsprozess.

Daher besteht der Bedarf, chemische Stoffe mit einem höheren Nachhaltigkeitsgehalt herzustellen, d. h. mit einem Verfahren, das gegenüber dem herkömmlichen erdölbasierten Verfahren eine verbesserte Nachhaltigkeit aufweist und gleichzeitig die optimale Energieeffizienz weitgehend beibehält. Im Zusammenhang mit der vorliegenden Erfindung werden derartig hergestellte chemische Stoffe als "nachhaltig hergestellte" chemische Stoffe bezeichnet.

Ziel der vorliegenden Erfindung ist es, ein Verfahren zur Herstellung Polyethylen- und/oder Polypropylen-Wachsen bereitzustellen, das nachhaltiger ist als das herkömmliche erdölbasierte Verfahren.

### Gegenstand der Erfindung

Die Erfindung betrifft ein Verfahren zur Herstellung von Polyethylen- oder Polypropylen-Wachsen, bestehend aus 60-100 Gew.-% bezogen auf das Gesamtpolymer, Ethylen- oder Propyleneinheiten mit einer Molmasse Mw von 1000 bis 50000 g/mol, einer Polydispersität Mw/Mn von 1,8 bis 5,0 einem Schmelzpunkt von 50 bis 150 °C, einer Schmelzenthalpie ΔH kleiner 300 J/g, einem Tropfpunkt von 60 bis 160 °C, einer Schmelzviskosität bei 170 °C von kleiner 20.000 mPa•s dadurch gekennzeichnet, dass das Verfahren die folgenden Schritte umfasst:
- Einspeisen eines Teilstroms von nachwachsenden Rohstoffen und/oder recycelten Rohstoffen in einen Hauptstrom von konventionellen, aus Erdöl stammenden Rohstoffen;
- Umwandlung der nachwachsenden Rohstoffe und/oder der recycelten Rohstoffe in Ethylen und/oder Propylen und/oder weitere C4 bis C10 1-Olefine zusammen mit den konventionellen Rohstoffen;
- katalytische Polymerisation des resultierenden Olefinströme,
   dadurch gekennzeichnet, dass das Ethylen und/oder Propylen und/oder weitere C4 bis C10 1-Olefine zumindest teilweise oder vollständig aus nachwachsenden oder recycelten Rohstoffen hergestellt wurde.

Somit stammt der nachhaltig erzeugte Kohlenstoffgehalt der Polyolefinwachse aus Olefinen, die aus nachwachsenden oder recycelten Rohstoffen hergestellt wurden.

Unter Polyethylen- und Polypropylen-Wachsen im Sinne der Erfindung werden Homopolymer- und Copolymerwachse verstanden, die Ethylen oder Propylen als Hauptbestandteil und damit zu mehr als 50 Gew.-% bezogen auf das Gesamtpolymer umfassen.

Ein weiterer Gegenstand der Erfindung betrifft Polyethylen- und/oder PolypropylenWachse, die mit Hilfe eines erfindungsgemäßen Verfahrens hergestellt wurden und einen nachhaltig erzeugten Kohlenstoffgehalt von 0,000001 Gew.-% bis 100 Gew.- %, bevorzugt von 0,0001 Gew.-% bis 100 Gew.-%, besonders bevorzugt von 0,001 Gew.-% bis 66 Gew.-%, bezogen auf die Gesamtmasse des Kohlenstoffs in der Verbindung, aufweisen.

### Detaillierte Beschreibung der Erfindung

Das erfindungsgemäße Verfahren setzt sich zusammen aus dem Verfahren zur Herstellung eines Polyethylen- oder Polypropylen-Wachses durch katalytische Polymerisation aus Ausgangskomponenten und untergeordneten Teilen des Verfahrens zur Herstellung dieser Ausgangskomponenten.

In einem solchen untergeordneten Teil des Verfahrens besteht die Erfindung darin, dass neben einem Hauptstrom konventioneller Rohstoffe ein Teilstrom nachwachsender Rohstoffe zugeführt wird und für die weiteren Verfahrensschritte nur noch die entsprechende Menge an nachwachsender Ausgangskomponente aus dem Produktstrom verwendet wird.

Auf diese Weise ist es möglich, den Umweltvorteil der nachhaltigen Herkunft des Rohstoffs mit dessen Verarbeitung in einem energetisch optimalen Prozess zum Ausgangsbestandteil zu verbinden.

Dieses Grundprinzip ist vor allem dann vorteilhaft, wenn Ausgangskomponenten nicht neu herstellbar sind oder nicht neu hergestellt werden können (wie z.B. bei organischen Stoffen), sondern die Nachhaltigkeit durch die Rückgewinnung des Rohstoffs allein durch Recycling erreicht wird. Dabei wird ein Teilstrom von recycelten Rohstoffen mit dem nicht recycelten Hauptrohstoffstrom gemischt. Der entsprechende Anteil des zusätzlich erzeugten Produkts kann dem rezyklierten Rohstoff in der Gesamtstoffbilanz zugerechnet werden.

Die erfindungsgemäßen Rohstoffe für das erfindungsgemäße Polyethylen- oder Polypropylen-Wachs stammen vorzugsweise aus nachhaltiger Produktion, wobei letztere nachwachsende Rohstoffe umfasst, die CO2 -neutral produziert wurden, nicht auf einem petrochemischen Ursprung basieren, nicht auf Erdöl basieren, aus physikalischem Recycling stammen und/oder aus der Kreislaufwirtschaft stammen. Nach den Grundsätzen der Kreislaufwirtschaft arbeitet die Wirtschaft mit der Vermeidung von Abfällen und Umweltbelastungen.
Erfindungsgemäß wird der Rohstoff für das Olefin in dem vorgenannten Teilstromverfahren dieser Art zumindest teilweise aus nachhaltiger Herkunft gewonnen.

Die nachwachsenden Rohstoffe für das Olefin werden vorzugsweise aus Tallöl, Tungöl, Holzteer, Kreosot oder pflanzlichen Ölen wie Palmöl, Sojaöl, Rapsöl, Sonnenblumenöl, Palmkernöl, Baumwollsamenöl, Erdnussöl, Maiskernöl, Kokosnussöl, Olivenöl, Sesamöl, Leinöl und/oder Safloröl ausgewählt. Eine bevorzugte Kategorie solcher nachwachsenden Rohstoffe ist Tallöl.

Die recycelten Rohstoffe können aus Lebensmittelabfällen, wie beispielsweise Speisereste oder Frittieröle, Rückständen oder Abfällen aus der Lebensmittelproduktion, Knochenmehl, Kunststoffabfällen der Papierherstellung oder der Zellstoffverarbeitung sowie aus anderen Materialien wiederverwerteten Ursprungs ausgewählt werden. Ein besonders bevorzugtes Beispiel für diese wiederverwerteten Rohstoffe ist Pyrolyseöl aus Kunststoffabfällen, z. B. aus Altreifen.

Weiterhin können recycelte Rohstoffe Klärschlamm aus Kläranlagen o.ä. sein.

Erfindungsgemäß verwendbares Tallöl stammt vorteilhaft aus dem Zellstoffverfahren (Kraftverfahren). Dabei werden die Tallölkomponenten einer alkalischen Hydrolyse unterzogen und durch Ansäuern in die Säuren überführt. Es wird rohes Tallöl gewonnen. Dieses wird durch Vakuumdestillation zu den Harzsäuren und Fettsäuren raffiniert. Es gibt auch Tallölpech und niedrige Siedepunkte.

Das erfindungsgemäß verwendbare Tallöl besteht zu 40-45 Gew.-% aus Fettsäuren, zu 30-50 Gew.-% aus Harzsäuren und zu 10-28 Gew.-% aus Sterinen.

Für den möglichen Einsatz bzw. die Nutzung der nachwachsenden Rohstoffe ist es wichtig, dass sie in ihren physikalischen Eigenschaften den konventionellen nichtnachwachsenden Rohstoffen möglichst ähnlich sind. So sollte z. B. die Viskosität (z. B. bei 70 °C) aus Gründen der Pumpfähigkeit einen Wert von 25-40 mm² /s haben, und der Erweichungspunkt sollte zwischen 0 und 100 °C liegen.
Zur Verringerung der Bildung von Koksverkrustungen ist es für eine erfindungsgemäße Verwendung wesentlich, dass das Tallöl einen Schwefelgehalt von 0,003% bis 3% aufweist.

Um die Korrosion der Behälterwände gering zu halten, hat das Tallöl erfindungsgemäß eine Säurezahl von 145-180 mg KOH/g.

Die Harzsäuren sind kondensierte trizyklische Systeme (Harze, C₂₀H₃₀O₂).

Bei den erfindungsgemäßen Tallölfettsäuren handelt es sich um C₁₈-Fettsäuren ähnlich dem Sojaöl. Neutrale Bestandteile ("Sterine", Ester, Sterole, Kohlenwasserstoffe) sind unerwünscht.

Erfindungsgemäß verwendbare Fettsäuren sind Palmitinsäure, Stearinsäure, Ölsäure, Linolsäure, Pinolensäure, Arachidonsäure.

Das Verfahren zur Herstellung von Polyethylen- oder Polypropylen-Wachsen aus zumindest teilweise nachwachsenden oder recycelten Rohstoffen wird vorzugsweise durchgeführt, indem in einem entsprechenden Prozess ein Teilstrom aus nachwachsenden Rohstoffen und/oder aus recycelten Rohstoffen in einen Hauptstrom aus konventionellen Rohstoffen eingespeist wird und die benötigte Menge an nachhaltig hergestellter organischer Komponente aus dem gemeinsamen Produktstrom für die weiteren Verfahrensschritte verwendet wird. Die hier verwendeten konventionellen Rohstoffe stammen aus Erdöl.

Bei dem erfindungsgemäßen Verfahren zur Herstellung von Polyethylen- oder Polypropylen-Wachsen aus zumindest teilweise nachwachsenden oder recycelten Rohstoffen wird der nachwachsende oder recycelte Rohstoff zusammen mit konventionellen Rohstoffen zum Olefin umgesetzt. Nachfolgend wird die benötigte Menge an nachhaltig hergestelltem Olefin aus dem gemeinsamen Produktstrom für die katalytische Polymerisation verwendet.

Es sind alle gängigen katalytischen Polymerisationsverfahren für Polyolefine denkbar, wobei Ziegler-Natta-Verfahren, wie beispielsweise in der DE3148229 oder EP0607773 beschrieben, und Polymerisationsverfahren mit Sandwich-Chelat-Verbindungen hervorzuheben sind. Bevorzugt werden Metallocen-katalysierte Polymerisationen durchgeführt.

Das Verfahren zur Herstellung von Polyethylen- oder Polypropylen-Wachsen aus zumindest teilweise nachwachsenden oder recycelten Rohstoffen wird vorzugsweise durchgeführt, indem in einem entsprechenden Prozess ein Teilstrom aus nachwachsenden Rohstoffen und/oder aus recycelten Rohstoffen in einen Hauptstrom aus konventionellen Rohstoffen eingespeist und der gemeinsame Produktstrom der Olefin-Komponente für die weiteren Verfahrensschritte verwendet wird.

Bei dem erfindungsgemäßen Verfahren zur Herstellung von Polyethylen- oder Polypropylen-Wachsen aus zumindest teilweise nachwachsenden oder recycelten Rohstoffen wird bevorzugt ein nachwachsender Rohstoff eingesetzt, wobei dieser nachwachsende Rohstoff zusammen mit konventionellen Rohstoffen zum Olefin umgesetzt wird, dann der gemeinsame Olefin-Produktstrom für die Metallocen-katalysierte Polymerisation eingesetzt wird.

Ein erfindungsgemäßes Verfahren zur Herstellung von erfindungsgemäßen Polyethylen- oder Polypropylen-Wachsen ist dadurch gekennzeichnet, dass das Olefin nach dem Teilstromverfahren in einem Steamcracker hergestellt wird. Das Rohmaterial wird dabei in einem Ofen bei 750 bis 900°C für kurze Verweilzeiten (0,1-0,6 s) behandelt. Das Rohmaterial wurde zuvor mit Dampf verdünnt, um die Olefinausbeute zu erhöhen und unerwünschte Koksablagerungen zu reduzieren. Das Verhältnis von Dampf zu Rohmaterial beträgt 0,3:1 bis 1:1.

Im Teilstromverfahren zur Herstellung der zumindest teilweise nachhaltigen Olefin-Komponente beträgt das Verhältnis von konventionellem Rohstoff zu nachhaltigem Rohstoff vorzugsweise 10⁹ :1 bis 1:10⁶, bevorzugt 10⁹:1 bis 1:10⁴, besonders bevorzugt 10⁹:1 bis 1:10³ und ganz besonders bevorzugt 10⁹:1 bis 1,5:1 beträgt. Bevorzugt wird die Einstufung des aus nachwachsenden Rohstoffen stammenden Olefins in der Gesamtmenge des Teilstromprozesses durch ein Zertifizierungsverfahren und ein daraus resultierendes Zertifikat sichergestellt. Ein bevorzugtes Zertifizierungsverfahren für ein Olefin aus nachwachsenden Rohstoffen ist in Deutschland das REDcert2 der TÜV Nord Cert GmbH zur Zertifizierung nachhaltiger Stoffströme in der chemischen Industrie.

Bevorzugt ist ein Verfahren zur Herstellung eines Polyethylen- oder ein Polypropylenwachses in dem Sandwich-Chelat-Verbindungen verwendet werden, insbesondere solche hergestellt durch die Verwendung von Metallocen-Verbindungen, dadurch gekennzeichnet, dass das Metallocen eine Verbindung der Formel I darstellt:

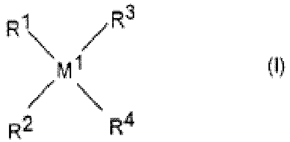

Diese Formel umfasst auch Verbindungen der Formel Ia

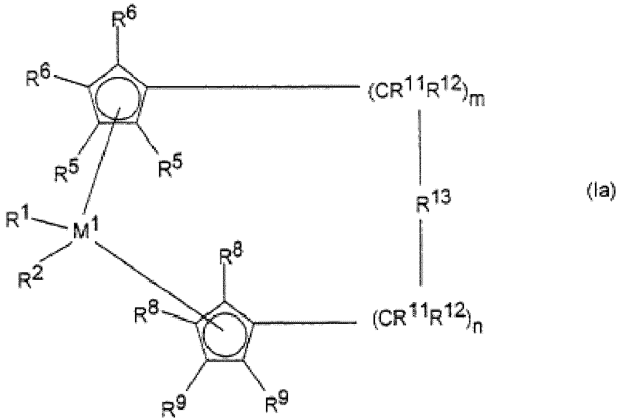

und der Formel Ib

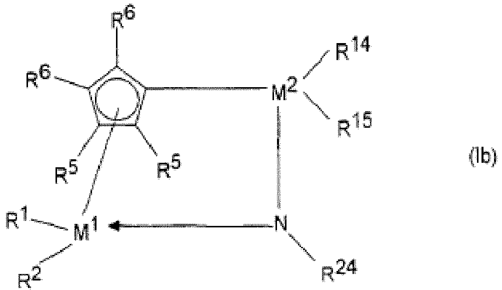

In den Formeln I, Ia und Ib ist M1 ein Metall der Gruppe IVb, Vb oderVlb des Periodensystems, beispielsweise Titan, Zirkon, Hafnium, Vanadium, Niob, Tantal, Chrom, Molybdän, Wolfram, vorzugsweise Titan, Zirkon und Hafnium.
R¹ und R² sind gleich oder verschieden und bedeuten ein Wasserstoffatom, eine C₁-C₁₀-, vorzugsweise C₁-C₃-Alkylgruppe, insbesondere Methyl, eine C₁-C₁₀-, vorzugsweise C₁-C₃-Alkoxygruppe, eine C₆-C₁₀-vorzugsweise C₆-C₈-Arylgruppe, eine C₆-C₁₀- , vorzugsweise C₆-C₈-Aryloxygruppe, eine C₂-C₁₀-, vorzugsweise C₂-C₄-Alkenylgruppe, eine C₇-C₄₀-, vorzugsweise C₇₋C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor.

R³ und R⁴ sind gleich oder verschieden und bedeuten einen ein- oder mehrkernigen Kohlenwasserstoffrest, welcher mit dem Zentralatom M¹ eine Sandwichstruktur bilden kann. Bevorzugt sind R³ und R⁴ Cyclopentadienyl, Indenyl, Benzoindenyl oder Fluorenyl, wobei die Grundkörper noch zusatzliche Substituenten tragen oder miteinander verbrückt sein konnen. Außerdem kann einer der Reste R³ und R⁴ ein substituiertes Stickstoffatom sein, wobei R²⁴ die Bedeutung von R¹⁷ hat und vorzugsweise Methyl, t-Butyl oder Cyclohexyl ist.

R⁵, R⁶, R⁸ und R⁹ sind gleich oder verschieden und bedeuten ein Wasserstoffatom, ein Halogenatom, vorzugsweise ein Fluor-, Chlor- oder Bromatom, eine C₁-C₁₀-, vorzugsweise C₁-C₄-Alkylgruppe, eine C₆-C₁₀-, vorzugsweise C₆-C₈-Arylgruppe, eine C₁-C₁₀-, vorzugsweise C₁-C₃-Alkoxygruppe, einen -NR¹⁶₂-, -SR¹⁶-, -OSiR¹⁶₃-, -SiR¹⁶₃- oder -PR¹⁶₂-Rest, worin R₁₆ eine C₁-C₁₀-, vorzugsweise C₁-C₃-Alkylgruppe oder C₆-C₁₀-, vorzugsweise C₆-C₈-Alkylgruppe, oder im Falle Si oder P enthaltender Reste auch ein Halogenatom, vorzugsweise Chloratom, ist, oder je zwei benachbarte Reste R⁵, R⁶, R⁸ oder R⁹ bilden mit den sie verbindenden C-Atomen einen Ring. Besonders bevorzugte Liganden sind die substituierten Verbindungen der Grundkörper Indenyl, Benzoindenyl, Fluorenyl und Cyclopentadienyl.

R¹³ ist

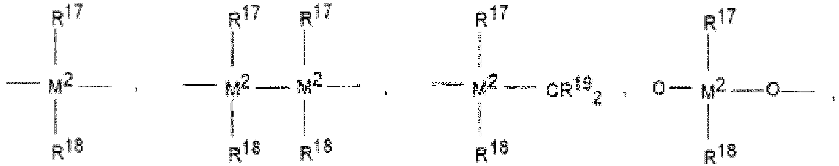

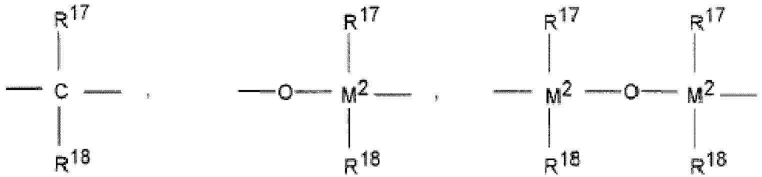

=BR¹⁷, =AlR¹⁷, -Ge-, -Sn-, -0-, -S-, =SO, =SO², =NR¹⁵, =CO, =PR¹⁵ oder =P(O)R¹⁵, wobei R¹⁷, R¹⁸ und R¹⁹ gleich oder verschieden sind und ein Wasserstoffatom, ein Halogenatom, eine C₁-C₃₀-, vorzugsweise C₁-C⁴-Alkylgruppe, insbesondere Methylgruppe, eine C₁-C₁₀-Fluoralkylgruppe, vorzugsweise CF₃-Gruppe, eine C₆-C₁₀-Fluorarylgruppe, vorzugsweise Pentafluorphenylgruppe, eine C₆-C₁₀-, vorzugsweise C₆-Cs-Arylgruppe, eine C₁-C₁₀, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹⁷ und R¹⁸ oder R¹⁷ und R¹⁹ bilden jeweils zusammen mit den sie verbindenden Atomen einen Ring.

M² ist Silizium, Germanium oder Zinn, bevorzugt Silizium und Germanium. R¹³ ist vorzugsweise =CR¹⁷R¹⁸, =SiR¹⁷R¹⁸, =GeR¹⁷R¹⁸, -O-, -S-, =SO, =PR¹⁷ oder =P(O)R¹⁷.

R¹¹ und R¹² sind gleich oder verschieden und haben die für R¹⁷ genannte Bedeutung. m und n sind gleich oder verschieden und bedeuten null, 1 oder 2, bevorzugt null oder 1, wobei m plus n null, 1 oder 2, bevorzugt null oder 1 ist.
R¹⁴ und R¹⁵ haben die Bedeutung von R¹⁷ und R¹⁸.

Beispiele für geeignete Metallocene sind die rac-Isomeren von:
Ethylen-bis-1-(2-methyl-tetrahydroindenyl)-zirkoniumdichlorid,
Ethylen-bis-1-(4,7-dimethyl-indenyl)zirkoniumdichlorid,
Ethylen-bis-1-(2-methyl-4-phenylindenyl)zirkoniumdichlorid,
Ethylen-bis-1-(2-methyl-4,5-benzoindenyl)zirkoniumdichlorid,
Ethylen-bis-1-(2-methyl-4,5-benzo-6,7-dihydroindenyl)zirkoniumdichlorid,
Ethylen-bis-1-(2-methyl-indenyl)zirkoniumdichlorid,
Ethylen-bis-1-tetrahydroindenylzirkoniumdichlorid,
sowie jeweils die Alkyl- oder Aryl-Derivate dieser Metallocendichloride.

Zur Aktivierung der Einzentren-Katalysatorsysteme werden geeignete Cokatalysatoren eingesetzt. Geeignete Cokatalysatoren für Metallocene der Formel I sind aluminiumorganische Verbindungen, insbesondere Alumoxane oder auch aluminiumfreie Systeme wie R²²ₓNH₄₋ₓBR²³₄, R²²ₓPH₄₋ₓBR²³₄, R²²₃CBR²³₄ oder BR²³₃. In diesen Formeln bedeutet x eine Zahl von 1 bis 4, die Reste R²² sind gleich oder verschieden, bevorzugt gleich, und bedeuten C₁-C₁₀-Alkyl oder C₆-C₁₈-Aryl oder zwei Reste R²² bilden zusammen mit dem sie verbindenden Atom einen Ring, und die Reste R²³ sind gleich oder verschieden, bevorzugt gleich, und stehen für C₆-C₁₈-Aryl, das durch Alkyl, Haloalkyl oder Fluor substituiert sein kann. Insbesondere steht R²² für Ethyl, Propyl, Butyl oder Phenyl und R²³ für Phenyl, Pentafluor- phenyl, 3,5-Bistrifluormethylphenyl, Mesityl, Xylyl oder Tolyl.

Diese Cokatalysatoren sind insbesondere geeignet in Kombination mit Metallocenen der Formel I, wenn R¹ und R² eine C₁-C₁₀-Alkylgruppe oder eine Aryl- oder Benzylgruppe, vorzugsweise Methylgruppe, bedeuten. Die Derivatisierung zu den Metallocenen der Formel I kann nach literaturbekannten Methoden, beispielsweise durch Umsetzung mit Alkylierungsmitteln wie Methyllithium erfolgen (vgl. Organometallics 9 (1990) 1359; J. Am. Chem. Soc. 95 (1973) 6263).

Zusätzlich ist häufig eine dritte Komponente erforderlich, um einen Schutz vor polaren Katalysator-Giften aufrecht zu erhalten. Hierzu sind aluminiumorganische Verbindungen, wie z. B. Triethylaluminium, Tributylaluminium und andere sowie Mischungen geeignet.

Je nach Verfahren können auch geträgerte Einzentren-Katalysatoren zur Verwendung kommen. Bevorzugt sind Katalysatorsysteme, bei welchen die Restgehalte von Trägermaterial und Cokatalysator eine Konzentration von 100 ppm im Produkt nicht überschreiten.

Die Polymerisation wird in bekannter Weise in Lösung, in Suspension oder in der Gasphase, kontinuierlich oder diskontinuierlich, ein- oder mehrstufig bei einer Temperatur von -60 bis 150 °C, vorzugsweise 0 bis 80 °C, durchgeführt. Polymerisiert werden Ethylen oder Propylen oder Ethylen mit mindestens einem Comonomer ausgewählt aus der Gruppe, die aus 1-Olefinen mit mindestens 3 C-Atomen bis 10 C-Atomen besteht oder Propylen mit mindestens einem Comonomer ausgewählt aus der Gruppe, die aus Ethylen und 1-Olefinen mit mindestens 4 C-Atomen bis 10 C-Atomen besteht, wobei ein oder mehrere Monomere zumindest teilweise aus nachwachsenden oder recycelten Rohstoffen hergestellt wurden.

Sofern ein Copolymer hergestellt wird, werden 70 bis 99,9, vorzugsweise 80 bis 99,7 Gew.-%, bezogen auf die Gesamtmenge der Monomeren, Ethylen oder Propylen und 0,1 bis 30, vorzugsweise 0,3 bis 20 Gew.-%, bezogen auf die Gesamtmenge der Monomeren, von mindestens einem Comonomer, wobei mindestens ein Monomer zumindest teilweise aus nachwachsenden oder recycelten Rohstoffen hergestellt wurde.

Beispiele für Copolymerwachse sind Propylen/Ethylen-, Propylen/1-Buten- und Propylen/1-Hexen-Wachse.

Beispiele für Terpolymere sind Propylen/Ethylen/1-Buten- oder Propylen/Ethylen/1,5-Hexadien-Terpolymer-wachse.

Copolymerwachse enthalten 0,1 bis 30 Gew.-% des Comonomers bezogen auf das Gesamtpolymer. Terpolymerwachse enthalten mindestens 70 Gew.-% des Hauptmonomers, wobei die beiden Comonomere jeweils bis zu 29 Gew.-%, in Summe beider Comonomere jedoch maximal 30 Gew.-% am Gesamtpolymer enthalten sind.

Als Molmassenregler wird Wasserstoff zugegeben, wobei der Wasserstoffpartialdruck im Bereich von 0,05 bis 50 bar, vorzugsweise 0, 1 bis 25 bar, insbesondere 0,2 bis 10 bar liegt. Das Molverhältnis der Olefine zu Wasserstoff beträgt 3 bis 3000, vorzugsweise 6 bis 1500, insbesondere 15 bis 300.

Der Gesamtdruck im Polymerisationssystem beträgt 0,5 bis 120 bar. Bevorzugt ist die Polymerisation in dem technisch besonders interessanten Druckbereich von 5 bis 64 bar.

Dabei wird die Metallocenverbindung in einer Konzentration, bezogen auf das Übergangsmetall, von 10⁻³ bis 10⁻⁷, vorzugsweise 10⁻⁴ bis 10⁻⁶ mol Übergangsmetall pro dm³ Lösemittel bzw. pro dm³ Reaktorvolumen angewendet. Das Aluminoxan wird in einer Konzentration von 10⁻⁵ bis 10⁻¹ mol, vorzugsweise 10⁻⁴ bis 10⁻² mol pro dm³ Lösemittel bzw. pro dm³ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan genannt.

Weiterhin kann eine Benzin- bzw. hydrierte Dieselölfraktion benutzt werden. Brauchbar ist auch Toluol.

Werden inerte Lösemittel verwendet, werden die Monomeren gasförmig oder flüssig zudosiert.

Bevorzugt wird im flüssigen Monomeren polymerisiert.

Wird nur ein Monomer als Suspensionsmittel verwendet, so wird das Comonomere, beziehungsweise werden die Comonomeren gasförmig oder flüssig zudosiert.

Des Weiteren ist es möglich, in einer Mischung verschiedener Monomeren als Suspensionsmittel zu polymerisieren; ein weiteres Monomeres kann dann flüssig oder gasförmig zudosiert werden.

Die erfindungsgemäßen Wachse können in jedem geeigneten Reaktor-Typ hergestellt werden, wie ein Loop-Reaktor, Autoklav oder Gasphase. Die Regelung des Molekulargewichts erfolgt bevorzugt nicht über die Variation der Polymerisationstemperatur, sondern bei konstanter Temperatur durch Veränderung des Wasserstoff-Drucks.

Die Dauer der Polymerisation ist beliebig, da das erfindungsgemäß zu verwendende Katalysatorsystem einen nur geringen zeitabhängigen Abfall der Polymerisationsaktivität zeigt.

Ein weiterer Gegenstand der Erfindung ist ein Polyethylen- oder Polypropylenwachs, das mittels eines Verfahrens gemäß Anspruch 1 herstellbar ist und einen nachhaltig erzeugten Kohlenstoffgehalt von 0,000001 Gew.-% bis 100 Gew.-%, bevorzugt von 0,0001 Gew.-% bis 100 Gew.-%, besonders bevorzugt von 0,001 Gew.- % bis 66 Gew.-%, bezogen auf die Gesamtmasse des Kohlenstoffs in der Verbindung, aufweist.

Die erfindungsgemäßen Polyethylen- oder Polypropylenwachse werden daher in einem erfindungsgemäßen Verfahren hergestellt, wobei mindestens ein Olefin mittels eines Teilstromverfahrens zur Herstellung der zumindest teilweise nachhaltigen Olefin-Komponente hergestellt wurde.

Durch das erfindungsgemäße Verfahren werden chemisch hoch einheitliche Polyethylen- oder Polypropylenwachse herstellbar.

Generell sind die Kettenenden aus gesättigten Kohlenwasserstoffgruppen aufgebaut. Die Polydispersität Mw/Mn ist mit typischen Werten von 1,8 - 5, bevorzugt von 2,0 - 3,0 extrem eng. Das Comonomer beziehungsweise die Comonomeren werden statistisch zwischen den Polyethylen- oder Polypropyleneinheiten verteilt, was zu einer optimalen Reduktion der Kristallinität und Härte der Polyethylen- oder Polypropylenwachse führt. Damit verbunden ist eine Senkung von Schmelz- und Kristallisationsenthalpie sowie von Schmelzpunkt und Kristallisationspunkt.

Entsprechend dem Verfahren können diese Parameter und darüber hinaus die Schmelzviskosität durch Variation der Wasserstoffmenge und durch Variation der Comonomeren über einen weiten Bereich exakt gesteuert werden. Mit dem erfindungsgemäßen Verfahren können darüber hinaus auch farblose, hochtransparente Wachse hergestellt werden. Die erfindungsgemäß herstellbaren Polymerpulver bestehen aus nichtklebenden kompakten kugelförmigen Teilchen mit enger Korngrö-ßenverteilung und hoher Schüttdichte.

Das Wachspulver zeichnet sich durch eine sehr gute Rieselfähigkeit aus und lässt sich somit optimal handhaben.

Die Polypropylenwachse sind in vielfältigen Einsatzgebieten für Produkte, die Wert auf einen reduzierten ökologischen Fußabdruck legen, vorteilhaft anwendbar. Sie sind unter anderem zur Herstellung von Druckfarben, Lacken, Tonern und als Komponente in Schmelzklebern geeignet.

Wachse mit hoher Kristallinität sind leicht mahlbar und eignen sich hervorragend zur Herstellung pulverförmiger Mischungen.

Weiterhin ist die Verwendung der Wachse als Hilfsmittel in der Kunststoffverarbeitung, zum Beispiel als Gleitmittel sehr vorteilhaft.

Auch bei der Herstellung von Masterbatches, die beispielsweise Pigmente oder Farbstoffe zur Polymer-Einfärbung enthalten, kommen die Wachse zum Einsatz, indem sie die Dispergierbarkeit der Farbträger erhöhen und damit zu intensiveren Farben beitragen.

### Experimenteller Teil:

Die Beispiele zeigen einige bevorzugte Ausführungsformen der Erfindung. In den nachstehenden Beispielen werden folgende Abkürzungen verwendet:

**Tabelle 1: Verwendete Abkürzungen**

| | |
|---|---|
| DSC | Differential Scanning Calorimetry |
| GPC | Gel-Permeations-Chromatographie |
| GC | Gaschromatographie |
| Mw | Molmassengewichtsmittel in g/mol nach GPC |
| Mn | Molmassenzahlenmittel in g/mol nach GPC |
| Mw/Mn | Polydispersität |
| SV | Schmelzviskosität |
| Tm | Schmelzpunkt |
| ΔH | Schmelzwärme |

Schmelzpunkte (Tm) und Schmelzwärmen (ΔH) werden durch DSC-Messungen mit einem "Perkin-Elmer DSC 7" bei 10 °C/min Aufheiz- und Abkühlrate aus dem 2. Aufheizen bestimmt.

Die Schmelzviskositäten (SV) werden bei 170 °C mit einem Rotationsviskosimeter gemäß DIN 53019 bestimmt.

### Beispiel 1:

186,4 kg Tallöl werden zusammen mit 3025 t konventionellem Naphtha in einem Steamcracker zu Propylen verarbeitet. Das Verhältnis von konventionellem Rohstoff zu nachhaltigem Rohstoff beträgt 16230:1. Die Menge des verwendeten Tallöls entspricht 30 kg nachhaltigem Propylen und 54,05 kg nachhaltigem Ethylen. Dieses nachhaltig erzeugte Olefin wird im 100 dm³ gemäß der folgenden Vorschrift vollständig polymerisiert.

30 kg nachhaltiges Propylen wird in einem inerten 100 dm³-Reaktor mit 12 mmol Triisobutylaluminium vorgelegt, unter Rühren auf 70 °C temperiert und 1,0 bar Wasserstoff zudosiert.

Parallel hierzu werden 31 mg Ethylen-bis-1,1'-(tetrahydroindenyl)zirkondichlorid in 15 ml 10 Gew.% toluolischer Methylaluminoxanlösung gelöst und gerührt. Die Polymerisation wird durch portionsweise Zugabe der Katalysator-Lösung gestartet und die Innentemperatur des Reaktors auf 70 °C geregelt. Wasserstoff wird gemäß GC-Kontrolle nachdosiert und auf den Anfangswert konstant gehalten. Nach 1 Stunde wird die Polymerisation durch Zugabe von CO₂ gestoppt, der Reaktor entspannt und das Produkt als Schmelze abgelassen. Es resultieren 12,1 kg Polypropylen (PP)-Wachs mit einem Gehalt von 100 Gew.-% nachhaltig erzeugtem Kohlenstoff, bezogen auf die Gesamtmasse des Kohlenstoffs.

Die GPC-Messung ergibt ein Mw von 3528 und Mw/Mn gleich 2,1. Die Polymerisationsbedingungen sind der Tabelle 2 zu entnehmen, die Produkteigenschaften der Tabelle 3.

### Beispiel 2:

186,4 kg Tallöl werden zusammen mit 3025 t konventionellem Naphtha in einem Steamcracker zu Propylen verarbeitet. Das Verhältnis von konventionellem Rohstoff zu nachhaltigem Rohstoff beträgt 16230:1. Die Menge des verwendeten Tallöls entspricht 30 kg nachhaltigem Propylen. Dieses im Teilstromverfahren erzeugte Propylen wird im 100 dm³ analog zur Vorschrift in Beispiel 1 mit 60 mg Ethylen-bis-1,1'-(2-ethyltetrahydroindenyl)zirkondichlorid vollständig polymerisiert, wobei 0,3 bar Wasserstoff verwendet wird.

Es resultieren 13,7 kg PP-Wachs mit einem Gehalt von 0,006 Gew.-% an nachhaltig hergestelltem Kohlenstoff. Die GPC-Messung ergibt ein Mw von 6450 und Mw/Mn gleich 2,5. Die Polymerisationsbedingungen sind der Tabelle 2 zu entnehmen, die Produkteigenschaften der Tabelle 3.

### Beispiel 3:

52310,8 kg Tallöl werden zusammen mit 275320 kg konventionellem Naphtha in einem Steamcracker zu Propylen verarbeitet. Das Verhältnis von konventionellem Rohstoff zu nachhaltigem Rohstoff beträgt 5,26:1. 30 kg des entstandenen Propylens werden mit 11 mg Ethylen-bis-1,1'-(2-methyl-4-phenylindenyl)zirkondichlorid analog zu Beispiel 1 polymerisiert, wobei 2,5 bar Wasserstoff verwendet werden. Es resultieren 12,2 kg PP-Wachs mit einem Gehalt von 19 Gew.-% nachhaltig erzeugtem Kohlenstoff, bezogen auf die Gesamtmasse des Kohlenstoffs. Die GPC-Messung ergibt ein Mw von 5591 und Mw/Mn gleich 2,27. Die Polymerisationsbedingungen sind der Tabelle 2 zu entnehmen, die Produkteigenschaften der Tabelle 3.

### Beispiel 4

1573 t Tallöl werden zusammen mit 3025 t konventionellem Naphtha in einem Steamcracker zu Ethylen und Propylen verarbeitet. Das Verhältnis von konventionellem Rohstoff zu nachhaltigem Rohstoff beträgt 1,92:1.

30 kg des entstandenen Propylens werden mit 11 mg Ethylen-bis-1,1'-(2-methyl-4-phenylindenyl)zirkondichlorid analog zu Beispiel 1 polymerisiert, wobei 2,5 bar Wasserstoff verwendet werden. Es resultieren 13,4 kg PP-Wachs mit einem Gehalt von 52 Gew.-% nachhaltig erzeugtem Kohlenstoff, bezogen auf die Gesamtmasse des Kohlenstoffs. Die GPC-Messung ergibt ein Mw von 5640 und Mw/Mn gleich 2,3. Die Polymerisationsbedingungen sind der Tabelle 2 zu entnehmen, die Produkteigenschaften der Tabelle 3.

### Beispiel 5:

Beispiel 1 wird mit 50 mg Ethylen-bis-1,1'-(tetrahydroindenyl)zirkondichlorid wiederholt, wobei 0,2 bar Wasserstoff und 0,8 bar konventionelles Ethylen dosiert werden. Es resultieren 16,2 kg Propylen/Ethylen-Copolymerwachs mit einem Propylenanteil von 95 Gew.-% und einem Ethylenanteil von 5 Gew.-%. Das Copolymer hat einen Gehalt von 95 Gew.-% an nachhaltig erzeugtem Kohlenstoff, bezogen auf die Gesamtmasse des Kohlenstoffs.

Die GPC-Messung ergibt ein Mw von 4665 und Mw/Mn gleich 2,05. Die Polymerisationsbedingungen sind der Tabelle 2 zu entnehmen, die Produkteigenschaften der Tabelle 3.

### Beispiele 6-11

31,9 kg Tallöl werden zusammen mit 518,3 t herkömmlichem Naphtha oder Gasöl in einem Steamcracker zu Propylen und Ethylen verarbeitet. Das Verhältnis von konventionellem Rohstoff zu nachhaltigem Rohstoff beträgt 1623:1. Die Menge des verwendeten Tallöls entspricht 5,14 kg nachhaltigem Propylen sowie 9,26 kg nachhaltigem Ethylen.

Ein trockener 16 dm³-Kessel wird mit Stickstoff gespült und mit 2,5 bar Wasserstoff sowie mit den 5,14 kg nachhaltigem Propylen befüllt. Dann werden 30 cm³ toluolische Methylaluminoxanlösung (entsprechend 40 mmol Al, mittlerer Oligomerisierungsgrad des Methylaluminoxans n = 20) sowie 25 Gew.-% der gewünschten Gesamtmenge an nachhaltigem Ethylen (Mengen siehe Tabelle 1) zugegeben und der Ansatz bei 30 °C 15 Minuten gerührt.

Parallel dazu wird die aus Tabelle 2 ersichtliche Menge des Zirkonocens Dimethylsilylbisindenylzirkondichlorid in 15 cm³ toluolischer Methylaluminoxanlösung (20 mmol Al) gelöst und durch 15-minütiges Stehenlassen voraktiviert. Die orangerote Lösung wird dann in den Kessel gegeben. Das Polymerisationssystem wird auf die in Tabelle 2 ersichtliche Polymerisationstemperatur gebracht und durch entsprechende Kühlung während der Polymerisationszeit (Tabelle 2) bei dieser Temperatur gehalten. Die restliche Ethylenmenge wird gleichmäßig während der Polymerisationszeit zudosiert.

Die Polymerisationsbedingungen sind der Tabelle 2 zu entnehmen, die Produkteigenschaften der Tabelle 3.

### Beispiele 12-14

31,9 kg Tallöl wird als Teilstrom zusammen mit 518,3 t konventionellem Naphtha in einem Steamcracker zu 9,26 kg Ethylen und 5,14 kg Propylen verarbeitet. Das Verhältnis von konventionellem Rohstoff zu nachhaltigem Rohstoff beträgt 1623:1. Das aus dem Gesamtprozess gewonnene Propylen und Ethylen, die massenbilanziell auf das eingesetzte Tallöl zurückzuführen sind, werden für die nachfolgende Synthese verwendet.

Es wird analog zu den Beispielen 5-10 verfahren, jedoch wird die als Molmassenregler verwendete Wasserstoffmenge variiert. Statt 2,5 bar werden die in Tabelle 2 angegebenen Mengen eindosiert. Die so erhaltenen Polypropylenwachse haben einem Gehalt von 0,06 Gew.-% an nachhaltig hergestelltem Kohlenstoff.

Die Polymerisationsbedingungen sind der Tabelle 2 zu entnehmen, die Produkteigenschaften der Tabelle 3.

### Beispiele 15-16

31,9 kg Tallöl werden zusammen mit 518,3 t herkömmlichem Naphtha oder Gasöl in einem Steamcracker zu Propylen, 1-Hexen und 1-Buten verarbeitet. Das Verhältnis von konventionellem Rohstoff zu nachhaltigem Rohstoff beträgt 1623:1. Die Menge des verwendeten Tallöls entspricht 5,14 kg nachhaltigem Propylen, 0,65 kg nachhaltigem 1-Hexen sowie 1,75 kg nachhaltigem 1-Buten.

Es wird analog zu den Beispielen 5 -10 verfahren, jedoch werden an Stelle des Comonomeren Ethylen die Comonomeren 1-Hexen (Beispiel 14), 1-Buten (Beispiel 15) verwendet. Die Polymerisationsbedingungen sind der Tabelle 2 zu entnehmen, die Produkteigenschaften der Tabelle 3.

### Beispiel 17

31,9 kg Tallöl werden zusammen mit 518,3 t herkömmlichem Naphtha oder Gasöl in einem Steamcracker zu Propylen, 1-Hexen und Ethylen verarbeitet. Das Verhältnis von konventionellem Rohstoff zu nachhaltigem Rohstoff beträgt 1623:1. Die Menge des verwendeten Tallöls entspricht 5,14 kg nachhaltigem Propylen, 0,65 kg nachhaltigem 1-Hexen sowie nachhaltigem 9,26 kg Ethylen.

Ein trockener 16 dm³-Kessel wird mit Stickstoff gespült und mit 2,5 bar Wasserstoff, mit 5,14 kg nachhaltigem Propylen, mit 300 g nachhaltigem 1-Hexen und 17,5 g nachhaltigem Ethylen befüllt. Dann werden 30 cm³ toluolische Methylaluminoxanlösung (entsprechend 40 mmol Al, mittlerer Oligomerisierungsgrad n = 20) zugegeben und der Ansatz 15 Minuten gerührt.

Parallel dazu werden 8,5 mg (0,019 mmol) Dimethylsilylbisindenylzirkondichlorid in 15 cm³ toluolischer Methylaluminoxanlösung (20 mmol Al) gelöst. Nach 15 Minuten wird die orangerote Lösung in den Kessel gegeben. Polymerisiert wird 60 Minuten bei 60 °C, während 52,5 g nachhaltiges Ethylen kontinuierlich zudosiert wird.

Es werden 2,1 kg Polymerpulver mit einem Gehalt von 100 Gew.-% an nachhaltig erzeugtem Kohlenstoff, bezogen auf die Gesamtmasse des Kohlenstoffs, erhalten. Das Polymer enthält 2,6 Gew.-% Hexeneinheiten, 2,5 Gew.-% Ethyleneinheiten und 94,9 Gew.-% Propyleneinheiten und weist folgende Eigenschaften auf: VZ = 29,1 cm³/g, Mw =17400, Mn = 8050, Mw/Mn = 2,2; SD= 410 g/dm³; SV= 760 mPa•s; Tropfpunkt 118°C, Schmelzpunkt 106°C, Kristallisationspunkt 68°C, Schmelzenthalpie 70,4 J/g, Kristallisationsenthalpie - 52,6 J/g, Glastemperatur -22°C.

Das Terpolymerwachs stammt zu 100 % aus nachwachsenden Rohstoffen.

Die Polymerisationsbedingungen sind der Tabelle 2 zu entnehmen, die Produkteigenschaften der Tabelle 3.

### Beispiel 18

305 g Pyrolyseöl aus dem Kunststoffrecycling werden zusammen mit 4335 kg konventionellem Naphtha in einem Steamcracker zu Ethylen verarbeitet. Das Verhältnis von konventionellem Rohstoff zu nachhaltigem Material beträgt 14213:1. Die Menge des eingesetzten Pyrolyseöls entspricht 70 g nachhaltigem Ethylen. Es wird verfahren wie in Beispiel 17, statt 300 g nachhaltigem 1-Hexen werden jedoch 500 g konventionelles 1-Buten vorgelegt und statt 5,14 kg nachhaltigem Propylen werden 5,14 kg konventionelles Propylen eingesetzt.

Es wird 1,92 kg Polymerpulver, mit 2,9 Gew.-% nachhaltig hergestelltem Kohlenstoff, bezogen auf die Gesamtmasse des Kohlenstoffs, erhalten.

Das Polymer enthält 4,1 Gew.-% Buteneinheiten, 2,9 Gew.-% Ethyleneinheiten und 93,0 Gew.% Propyleneinheiten und weist folgende Eigenschaften auf:VZ = 30 cm³/g; Mw = 19100, Mn= 9100, Mw/Mn = 2,1; SD = 370 g/dm³, SV= 760 mPa•s; Tropfpunkt 120 °C, Schmelzpunkt 110 °C, Kristallisationspunkt 70 °C, Schmelzenthalpie 76, 1 J/g, Kristallisationsenthalpie -62,0 J/g, Glastemperatur -21 °C. Die Polymerisationsbedingungen sind der Tabelle 2 zu entnehmen, die Produkteigenschaften der Tabelle 3.

**Tabelle 2: Polymerisationsdaten**

| Beispiel | H₂ - Menge [bar] | g Comonomer | mg Zirkonocen | Polymerisationstemperatur [°C] | Polymerisationszeit [min] | Gehalt Comonereinheiten [Gew.-%] | Renewable Carbon Content [Gew.-%] |
|---|---|---|---|---|---|---|---|
| 1 | 1,0 | 0 | 31 | 70 | 60 | 0 | 100 |
| 2 | 0,3 | 0 | 60 | 70 | 60 | 0 | 0,006 |
| 3 | 2,5 | 0 | 11 | 70 | 60 | 0 | 19 |
| 4 | 2,5 | 0 | 11 | 70 | 60 | 0 | 52 |
| 5 | 0,2 | 0,8 bar Ethylen | 50 | 70 | 60 | | 95 |
| 6 | 2,5 | 12 Ethylen | 12 | 60 | 60 | 0,5 | 100 |
| 7 | 2,5 | 110 Ethylen | 13,4 | 60 | 60 | 4,6 | 100 |
| 8 | 2,5 | 150 Ethylen | 7,8 | 60 | 75 | 7,3 | 100 |
| 9 | 2,5 | 200 Ethylen | 6,8 | 60 | 60 | 12,0 | 100 |
| 10 | 2,5 | 300 Ethylen | 7,8 | 60 | 60 | 15,1 | 100 |
| 11 | 2,5 | 140 Ethylen | 8,4 | 50 | 60 | 8,8 | 100 |
| 12 | 0,5 | 80 Ethylen | 9,5 | 60 | 60 | 2,1 | 0,06 |
| 13 | 1 | 80 Ethylen | 11,2 | 60 | 45 | 2,1 | 0,06 |
| 14 | 5 | 140 Ethylen | 6,5 | 60 | 60 | 4,8 | 0,06 |
| 15 | 2,5 | 200 1-Hexen | 8,3 | 60 | 60 | 2,0 | 100 |
| 16 | 2,5 | 1000 1-Buten | 8,2 | 60 | 90 | 10,4 | 100 |
| 17 | 2,5 | 17,5 Ethylen | 8,5 | 60 | 60 | 2,6 1-Hexen | 100 |
| | | 300 1-Hexen | | | | 2,5 Ethylen | |
| 18 | 2,5 | 17,5 Ethylen | 8,5 | 60 | 60 | 4,1 1-Buten | 2,9 |
| | | 500 1-Buten | | | | 2,9 Ethylen | |

**Tabelle 2: Produkteigenschaften**

| Beispiel | Typ | Mw | Mn | Mw/Mn | SV (170°C) | Tₘ [°C] | ΔH |
|---|---|---|---|---|---|---|---|
| 1 | C3-Homo | 3529 | 1680 | 2,1 | 30 | 122 | 91 |
| 2 | C3-Homo | 6450 | 2580 | 2,5 | 90 | 118 | 80 |
| 3 | C3-Homo | 5591 | 2463 | 2,27 | 75 | 155 | 125 |
| 4 | C3-Homo | 5640 | 2452 | 2,3 | 72 | 156 | 127 |
| 5 | C3/C2 Copo | 4665 | 2276 | 2,05 | 41 | 108 | 72 |
| 6 | C3/C2 Copo | 12500 | 5850 | 2,1 | 300 | 137 | 98,5 |
| 7 | C3/C2 Copo | 17750 | 8050 | 2,2 | 740 | 108 | 74,3 |
| 8 | C3/C2 Copo | 22600 | 8670 | 2,6 | 1640 | 93 | 53,7 |
| 9 | C3/C2 Copo | 31750 | 15120 | 2,1 | 3450 | 88 | 39,2 |
| 10 | C3/C2 Copo | 43250 | 18800 | 2,3 | 5820 | 81 | 24,9 |
| 11 | C3/C2 Copo | 26100 | 12150 | 2,1 | 2800 | 86 | 56,0 |
| 12 | C3/C2 Copo | 34750 | 1505 | 2,3 | 4590 | 121 | 79,2 |
| 13 | C3/C2 Copo | 23850 | 9930 | 2,4 | 1820 | 123 | 82,3 |
| 14 | C3/C2 Copo | 12600 | 5930 | 2,1 | 420 | 109 | 74,9 |
| 15 | C3/C6 Copo | 10200 | 4800 | 2,1 | | 127 | 91,4 |
| 16 | C3/C4 Copo | 9870 | 4700 | 2,1 | | 115 | 85,1 |
| 17 | C3/C6/C2 Terpo | 17400 | 8050 | 2,2 | 760 | 106 | 70,4 |
| 18 | C3/C4/C2 Terpo | 19100 | 9100 | 2,1 | 760 | 110 | 76,1 |

Wie den Tabellen 2 und 3 zu entnehmen ist können mit Hilfe des erfindungsgemäßen Verfahrens Polypropylenwachse unter Verwendung von Rohstoffen aus erneuerbaren Quellen hergestellt werden, die einen variablen nachhaltig erzeugten Kohlenstoff-Anteil aufweisen und damit einen geringeren ökologischen Fußabdruck als herkömmliche Polypropylenwachse aufweisen.

## Patentansprüche

1. Verfahren zur Herstellung eines Polyethylen- oder eines Polypropylen-Wachses, bestehend aus 60-100 Gew.-% bezogen auf das Gesamtpolymer Ethylen- oder Propyleneinheiten, wobei das Wachs eine Molmasse Mw von 1000 bis 50000 g/mol, eine Polydispersität Mw/Mn von 1,8 bis 5,0, einen Schmelzpunkt von 50 bis 150 °C, eine Schmelzenthalpie ΔH kleiner 300 J/g, einen Tropfpunkt von 60 bis 160 °C und eine Schmelzviskosität bei 170 °C von kleiner 20.000 mPa•s aufweist, **dadurch gekennzeichnet, dass** das Verfahren die folgenden Schritte umfasst:
- Einspeisen eines Teilstroms von nachwachsenden Rohstoffen und/oder recycelten Rohstoffen in einen Hauptstrom von konventionellen, aus Erdöl stammenden Rohstoffen;
- Umwandlung der nachwachsenden Rohstoffe und/oder der recycelten Rohstoffe in Ethylen und/oder Propylen und/oder weitere C4 bis C10 1-Olefine zusammen mit den konventionellen Rohstoffen;
- katalytische Polymerisation der resultierenden Olefinströme,
**dadurch gekennzeichnet, dass** das Ethylen und/oder Propylen und/oder weitere C4 bis C10 1-Olefine zumindest teilweise oder vollständig aus nachwachsenden oder recycelten Rohstoffen hergestellt wurde.

2. Verfahren nach Anspruch 1, **dadurch gekennzeichnet dass** die nachwachsenden Rohstoffe Tallöl, Tungöl, Holzteer, Kreosot oder pflanzliche Öle wie Palmöl, Sojaöl, Rapsöl, Sonnenblumenöl, Palmkernöl, Baumwollsamenöl, Erdnussöl, Maiskernöl, Kokosnussöl, Olivenöl, Sesamöl, Leinöl und/oder Safloröl sind und/oder die recycelten Rohstoffe ausgewählt sind aus Lebensmittelabfällen, Kunststoffabfällen, Rückständen oder Abfällen aus der Lebensmittelproduktion, der Papierherstellung oder der Zellstoffverarbeitung, und allen anderen Materialien recycelten Ursprungs.

3. Verfahren nach Anspruch 1 oder 2, **dadurch gekennzeichnet, dass** das Verhältnis des Hauptstroms an konventionellem Rohstoff zu dem Teilstrom an nachwachsenden Rohstoffen und/oder recycelten Rohstoffen 10⁹:1 bis 1:10⁶ bevorzugt 10⁹:1 bis 1:10⁴, besonders bevorzugt 10⁹:1 bis 1:10³, ganz besonders bevorzugt 10⁹:1 bis 1,5:1 beträgt.

4. Verfahren gemäß einem der Ansprüche 1 bis 3, **dadurch gekennzeichnet, dass** die Polymerisation mit Hilfe eines Metallocen-Katalysators durchgeführt wurde.

5. Verfahren nach Anspruch 4, **dadurch gekennzeichnet, dass** bei einer Temperatur von 60 °C bis 100 °C, bei einem Druck von 0,5 bis 120 bar, in Lösung, in Suspension oder in der Gasphase, in Gegenwart von Wasserstoff als Molmassenregler und eines Katalysators, welcher aus einem Metallocen und einem Aluminoxan besteht, polymerisiert wird, **dadurch gekennzeichnet,**
**dass** der Wasserstoffpartialdruck 0,05 bis 50 bar und das Molverhältnis Olefin zu Wasserstoff 3 bis 3000:1 beträgt und dass das Metallocen eine Verbindung der Formel 1 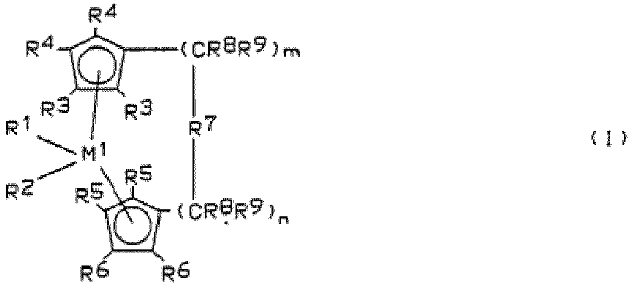 ist, worin
M¹ ein Metall der Gruppe IVb, Vb oder Vlb des Periodensystems ist,
R¹ und R² gleich oder verschieden sind und ein Wasserstoffatom, eine C₁-C₁₀-Alkylgruppe, eine C₁-C₁₀-Alkoxygruppe, eine C₆-C₁₀-Arylgruppe, eine C₆-C₁₀-Aryloxygruppe, eine C₂-C₁₀-Alkenylgruppe, eine C₇-C₄₀-Arylalkylgruppe, eine C₇-C₄₀-Alkylarylgruppe, eine C₈-C₄₀-Arylalkenylgruppe oder ein Halogenatom bedeuten,
R³, R⁴, R⁵ und R⁶ gleich oder verschieden sind und ein Wasserstoffatom, ein Halogenatom, eine C₁-C₁₀-Alkylgruppe, eine C₆-C₁₀-Arylgruppe, eine C₁-C₁₀-Alkoxygruppe, einen -NR¹⁰₂, -SR¹⁰ -, -OSiR¹⁰₃, -SiR¹⁰₃, oder -PR¹⁰₂ -Rest bedeuten, worin R¹⁰ eine C₁-C₁₀-Alkylgruppe, eine C₆-C₁₀-Arylgruppe oder im Falle Si oder P enthaltender Reste auch ein Halogenatom ist, oder je zwei benachbarte Reste R³, R⁴, R⁵ oder R⁶ mit den sie verbindenden C-Atomen einen Ring bilden,
R⁷ 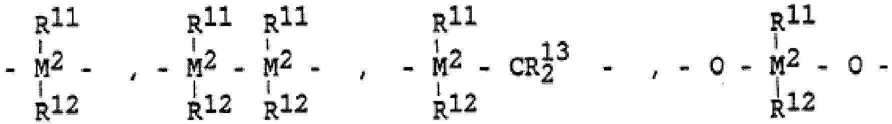 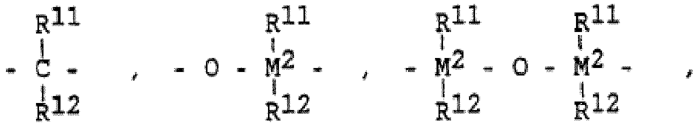
=BR¹¹, =AlR¹¹, -Ge-, -Sn-, -O-, -S-, =SO, =SO₂, =NR¹¹, =CO, =PR¹¹ oder =P(O)R¹¹ ist, wobei
R¹¹, R¹² und R¹³ gleich oder verschieden sind und ein Wasserstoffatom, ein Halogenatom, eine C₁-C₃₀-Alkylgruppe, eine C₁-C₁₀-Fluoralkylgruppe, eine C₆-C₁₀-Arylgruppe, eine C₆-C₁₀-Fluorarylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenyl-gruppe, eine C₇-C₄₀-Alkylarylgruppe bedeuten oder R¹¹ und R¹² oder R¹¹ und R¹³ jeweils mit den sie verbindenden Atomen einen Ring bilden,
M² Silizium, Germanium oder Zinn ist,
R⁸ und R⁹ gleich oder verschieden sind und die für R¹¹ genannte Bedeutung haben,
m und n gleich oder verschieden und null, 1 oder 2 sind, wobei m plus n null, 1 oder 2 ist,
und das Aluminoxan eine Verbindung der Formel (II) 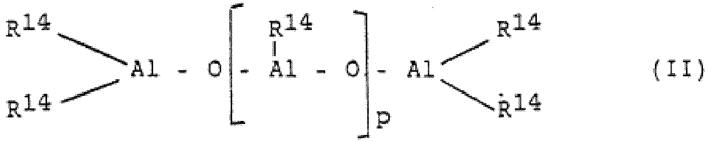
für den linearen Typ und/oder der Formel (III) 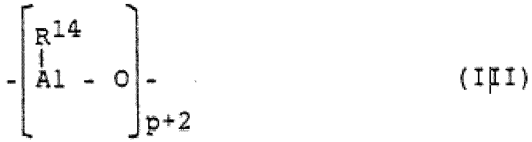
für den cyclischen Typ ist, wobei in den Formeln (II) und (III) R¹⁴ eine C₁-C₆-Alkylgruppe bedeutet und p eine ganze Zahl von 2 bis 50 ist, bedeutet.

6. Verfahren nach mindestens einem der der vorhergehenden Ansprüche, **dadurch gekennzeichnet, dass** der nachwachsende Rohstoff Tallöl ist.

7. Verfahren nach mindestens einem der der vorhergehenden Ansprüche, **dadurch gekennzeichnet, dass** ein recycelter Rohstoff Pyrolyseöl aus Kunststoffabfällen, zum Beispiel aus Altreifen, ist.

8. Polyethylen- oder Polypropylenwachs, herstellbar nach einem Verfahren gemäß einem der Ansprüche 1 bis 7, **dadurch gekennzeichnet, dass** es einen nachhaltig erzeugten Kohlenstoffgehalt von 0,000001 Gew.-% bis 100 Gew.-%, bevorzugt von 0,0001 Gew.-% bis 100 Gew.-%, besonders bevorzugt von 0,001 Gew.-% bis 66 Gew.-%, bezogen auf die Gesamtmasse des Kohlenstoffs in dem Wachs, aufweist.

9. Verwendung eines Polyethylen- oder eines Polypropylenwachses, welches nach einem Verfahren gemäß mindestens einem der Ansprüche 1 bis 7 hergestellt wurde, zur Herstellung von Druckfarben, Lacken, Tonern, Schmelzklebern, Masterbatches und/oder als Hilfsmittel in der Kunststoffverarbeitung.
